# EUROPEAN PATENT APPLICATION

(11) **EP 4 465 438 A1**
(43) Date of publication of application: **20.11.2024**
(21) Application number: 24176412.5
(22) Date of filing: 16.05.2024
(51) Int. Cl.: H01M 50/645, H01M 50/655, H01M 10/052, H01M 50/627, H01M 10/04, H01M 10/42

(54) **CAP FOR ELECTROLYTE CELLS AND PROCESS FOR PRODUCING AN ELECTROLYTE CELL**

(30) Priority: 18.05.2023 IT 202300010092
(71) Applicant: SOVEMA GROUP S.P.A., 37069 Villafranca (VR) (IT)
(72) Inventor: FERRARESE, Luciano, 37030 Lavagno (VR) (IT)
(74) Representative: Gallo, Luca

(57) **Abstract**

Cap (1) for electrolyte cells (100) comprising a main body (2), which is intended to be connected to an electrolyte cell (100) and internally defines a supply duct (3) extended along an extension axis (X) for the introduction and/or the extraction of a fluid into and/or from the electrolyte cell (100), and a shutter (4), which at least partially engages the supply duct (3) and is slidably connected to the main body (2).

More in detail, the shutter (4) is movable between a closed position, in which it is placed to close the supply duct (3) in order to prevent the passage of fluid along the supply duct (3), and an open position, in which it frees the supply duct (3) in order to allow the passage of fluid along the supply duct (3).

In addition, the cap (1) comprises at least one elastically pliable portion (5) fixed to the main body (2) inside the supply duct (3), which is extended projecting towards the interior of the supply duct (3) and is configured for being elastically deformed following the movement of the shutter (4) from the closed position to the open position, in order to elastically bring the shutter (4) from the open position to the closed position.

The main body (2) is also provided with a centering portion (6), which is extended with a flaring increasing from the supply duct (3) along the extension axis (X).

## Description

### Field of application

The present invention regards a cap for electrolyte cells and a process for producing an electrolyte cell, according to the preamble of the respective independent claims.

More in detail, the cap is intended to be mounted on an electrolyte cell at the end of its assembly and before the start of a subsequent formation step, and is adapted to allow the insertion of the electrolyte within the electrolyte cell itself and the outflow of gases that are generated during the formation step.

The present cap and process are therefore advantageously intended to be employed in the field of production of batteries or accumulators, advantageously lithium batteries, in particular during the process of production and formation of electrolyte cells, such as for example lithium-ion electrolyte cells.

### State of the art

Electrical accumulators (or batteries) are known, which are formed by a set of electrolyte cells capable of converting the energy produced by chemical reactions into low-voltage direct-current electrical energy. The batteries of known type can be divided into primary batteries (non-rechargeable) and secondary batteries (rechargeable), such as for example lead-acid, nickelcadmium, nickel-hydride metal and lithium-ion batteries.

In particular, increasingly widespread on the market is the request for batteries or accumulators with lithium-ion electrolyte cells, employed for example in the field of electric-powered vehicles, i.e. in the field of portable electrical appliances such as computers, telephones, etc.

As is known, the production of the electrolyte cells provides for a preliminary step of physical production of the containment casing, which can have a prismatic, cylindrical or pouch shape and internally defines a cavity in which the anode, the cathode and the electrolyte necessary for the chemical reaction are placed.

In particular, the following discussion refers mainly to the production of prismatic electrolyte cells, since the cylindrical or pouch electrolyte cells (known in the technical jargon with the term pouch) do not have the same critical features during production and formation.

In particular, the prismatic cells are provided with a filling hole, which is susceptible of placing the internal cavity of the cell in fluid communication with the outside environment, and is arranged in order to allow the insertion of the electrolyte in the internal cavity during its production.

Subsequently, the cell is subjected to a process (also known as formation) in which the cell is charged for the first time by means of the application of voltages and currents according to a programmed logic. For example, as is known, the forming of the lithium-ion cells provides for a first step of charging the cell, usually with duration of several hours, in which a voltage is applied to the electrolyte cell so as to trigger the chemical reactions that allow accumulating, within the electrolyte cell, a specific quantity of electric charge. Subsequently, the forming of the cell provides for a first rest step (aging), in which the cell is electrically isolated and is left to rest for a period, even for several days, in order to allow the recombination of the ions of the electrolyte solutions at its interior. Subsequently, there is an alternation of cell charge/discharge steps, which provide for the cyclic execution of multiple charge and discharge intervals, of duration for example of one hour each, with further aging steps. Such step of forming an electrolyte cell with the aforesaid alternation of steps can require a duration even of several days, e.g. 300 hours.

During such step of formation in the electrolyte cells, gases are generated which must be extracted from the internal cavity in order to prevent an excessive increase of the internal pressure that could lead to the damage (e.g. to its deformation or even breakage) of the electrolyte cell. Generally, the aforesaid gases are suctioned from within the electrolyte cells through the same filling hole used for introducing the electrolyte therein. Therefore, at least during the first charging step, but usually also during the subsequent charging/discharging steps, the filling hole for the electrolyte cells must be open, in a manner such to allow the aforesaid suction of the gases produced during formation.

Nevertheless, the opening of the filling hole can determine several drawbacks. For example, in the event in which the electrolyte comes into contact with the external environment (humid air), this would tend to crystallize, compromising the final quality of the electrolyte cell itself. In addition, the electrolyte must be managed with extreme care, in suitable environments, such as for example dry rooms at controlled temperature and humidity, since on one hand it tends to disperse into the environment substances that are harmful for operators , and on the other hand it can determine risks of explosion or fire due to sudden overheating.

Otherwise, during the steps of aging, the cells are placed in suitable stores which, unlike the dry room, do not have controlled humidity, so as to reduce the production costs of the batteries. For such reason, in such aging steps, the filling hole for the cells must be closed in order to seal the interior of the electrolyte cell from the outside environment, preventing the electrolyte from coming into contact with the outside environment in a manner such to prevent the onset of the above-discussed problems. For such purpose, temporary caps are known, which are mounted on the electrolyte cell during the aging step (at the end of the charging/discharging step) in order to close the filling hole, and which are removed from the electrolyte cell at the end of the same aging step (before the subsequent charging/discharging step).

More in detail, the caps of known type are made of a plastic material which usually has frustoconical shape and is inserted by interference in the filling hole in order to prevent the outflow of the gases from the cell during the aforesaid aging step.

In operation, the cap is mounted in an automatic manner, by means of a suitable machine, to close the filling hole before the cell exits from the dry room in order to be sent to a storage for the aging step, and in the same manner is automatically removed within the dry room when requested. More in detail, the cap is removed from the electrolyte cell in the event in which it is necessary to insert the electrolyte within the electrolyte cell itself, or in the event in which it is necessary to remove the excess gases produced during at least one of the charging/discharging steps of the cell itself.

The caps for electrolyte cells briefly described up to now have in practice shown that they do not lack drawbacks.

The main drawback lies in the fact that such caps have proven to be extremely costly with regard to their installation. More in detail, such caps are of disposable type, and each time a cap is removed from the cell they are no longer reusable since they can no longer newly ensure the hermetic closure of the filling hole. Since, as discussed above, the forming of the cells involves an alternation of numerous aging steps with charging/discharging steps, for the forming of a single cell it is necessary to employ a considerable number of disposable caps, which therefore determines an increase of the production costs per single cell. A further drawback lies in the fact that such caps determine an increase of costs (and other issues) linked to the correct disposal of the caps themselves.

A further drawback lies in the fact that such caps determine a considerable increase of the time necessary for the forming process, therefore determining a reduction of the hourly production capacity. More in detail, the removal and the insertion of the cap determine the systematic repetition of such steps for all the aging steps (also numerous) which are provided during the forming of the electrolyte cells.

In general, the industrial plants for the production of electrolyte cells per lithium batteries are characterized by production volumes, in terms of cells/hour, that are extremely high and, therefore, a minimum increase of the processing time of each cell translates into a reduction of the production volume of the plant, and consequently of its production efficiency.

In addition, since such removal and insertion operations are respectively executed when the cell enters into the dry room and before the same cell exits from the dry room, it is necessary to provide for dedicated tools, for example movement systems of pick and place type, placed within the dry room in order to execute, in an automated manner, the insertion and removal of the caps of known type. The presence of such apparatuses involves an increase of the internal volume of the dry room, with a consequent increase of the management costs of the same, which translates into an increase of the production costs of the single cell.

A further drawback lies in the fact that such operations of insertion and removal of the aforesaid caps of known type are hard to execute, even when executed by a dedicated automated apparatus, which determines the risk of incorrect insertion and/or removal of one or more caps from the corresponding electrolyte cell.

Such drawback is accentuated by the repetition of such operations for each aging operation, which determines an increase of the probability of errors during the aforesaid operations.

In addition, such operations are difficult since, generally, the filling hole of the electrolyte cells has reduced dimensions, for example it has a diameter comprised between 1 and 4 mm, and consequently it is necessary to have high precision and an increase of the time necessary for the automatic positioning of the caps themselves at the filling holes. Since, as reported above, the caps of known type are positioned on the filling holes multiple times in the course of the process of forming the cells, the slowness of the positioning of the caps involves a considerable increase of the processing time of a single cell, increasing the overall cost thereof. In addition, the greater the precision requested to the aforesaid movement systems, the greater the cost, also in this case increasing the final production cost of each single cell.

Since the insertion and the removal of the caps of known type occurs in an automatic manner, generally a control system is provided, for example a viewing system, in order to verify the outcome of the aforesaid operations of insertion and removal. In addition, in general storage means are provided for, placed within the dry room, for managing the electrolyte cells that are not correctly processed, identified by the control system. For example, in the event in which the cap is not correctly positioned on an electrolyte cell, the storage means are susceptible of intercepting the electrolyte cell itself before it exits from the dry room, thus preventing the electrolyte at its interior from coming into contact with the humid air.

Nevertheless, the presence of the control system and storage means involves an increase of the internal volume of the dry room, with a consequent increase of the management costs of the same, which translates into an increase of the production costs of the single cell.

### Presentation of the invention

In this situation, the problem underlying the present invention is to overcome the drawbacks manifested by the art known up to now, by providing a cap for electrolyte cells which allows the insertion of electrolyte and the outflow of gases from the electrolyte cell during the forming of the electrolyte cell itself.

Further object of the present invention is to provide a cap for electrolyte cells, and a production process, which allows reducing the costs for producing electrolyte cells.

Further object of the present invention is to provide a cap for electrolyte cells and a production process which ensure a high operative flexibility.

Further object of the present invention is to provide a cap for electrolyte cells which is simple and entirely reliable in operation.

### Brief description of the drawings

The technical characteristics of the invention, according to the aforesaid objects, can be clearly found in the contents of the below-reported claims and the advantages thereof will be more evident in the following detailed description, made with reference to the enclosed drawings, which represent a merely exemplifying and non-limiting embodiment of the invention, in which:

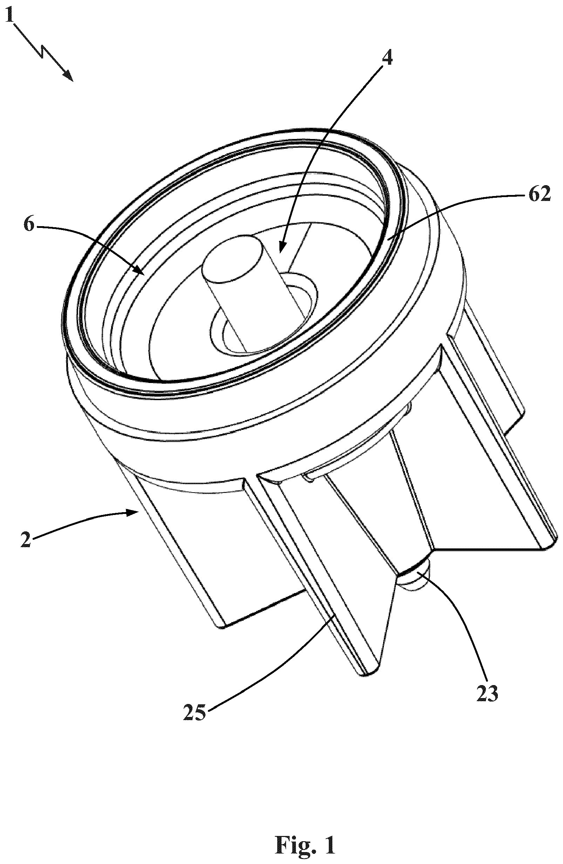

- figure 1 shows a perspective view of a first embodiment of the cap for electrolyte cells, object of the present invention;
- figure 2 shows a side view of the cap for electrolyte cells of figure 1 mounted on an electrolyte cell;
- figure 3 shows a side section view of the cap for electrolyte cells of figure 1 with a shutter in a closed position;

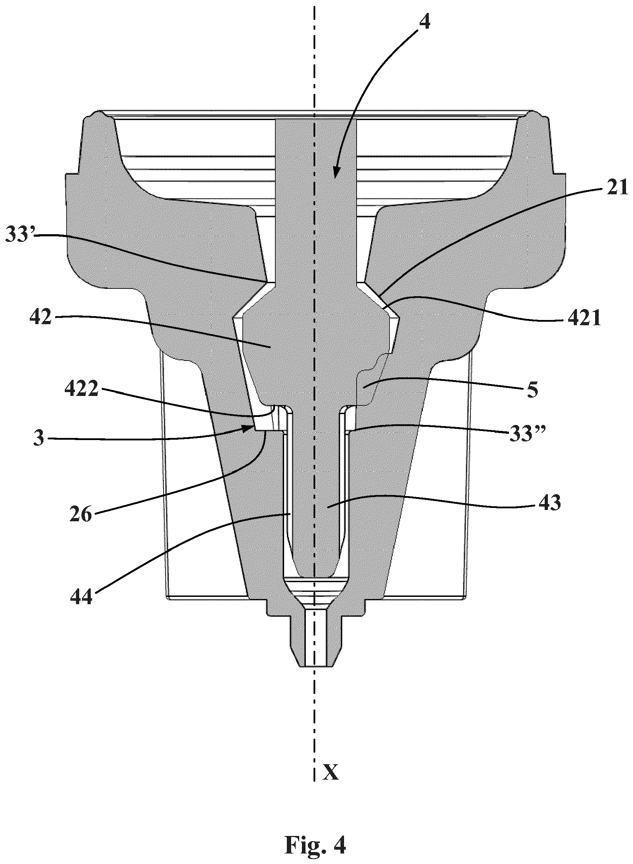

- figure 4 shows a side section view of the cap for electrolyte cells of figure 1 with a shutter in an open position;
- figure 5 shows a side section view of a main body of the cap for electrolyte cells of figure 1;

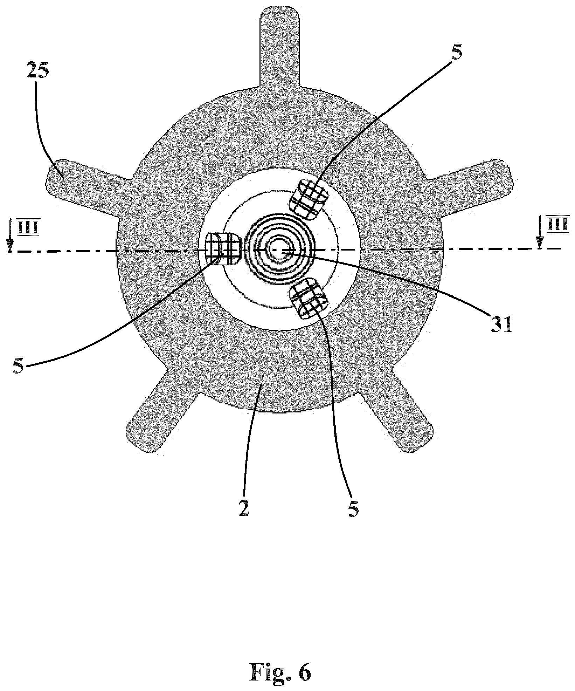

- figure 6 shows a cross section view of the main body of figure 5 along the line VI-VI of figure 3;
- figure 7 shows a cross section view of the cap for electrolyte cells of figure 3 along the line VII-VII of figure 3;
- figure 8 shows a cross section view of the cap for electrolyte cells of figure 3 along the line VIII-VIII of figure 3;

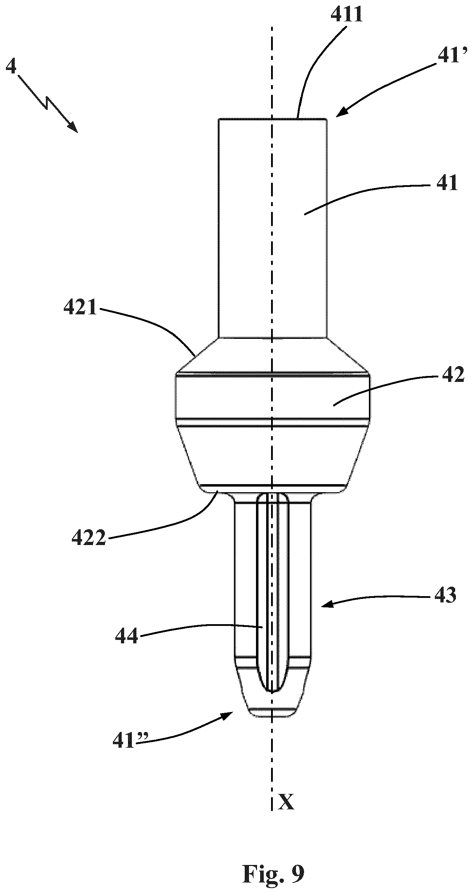

- figure 9 shows a side view of a shutter of the cap for electrolyte cells of figure 1;
- figure 10 shows a section view of a second embodiment of the cap for electrolyte cells, object of the present invention.

### Detailed description of a preferred embodiment

With reference to the enclosed drawings, reference number 1 overall indicates an embodiment of a cap for electrolyte cells 100, object of the present invention.

The present cap 1 for electrolyte cells 100 is intended to be employed during the industrial production of electrolyte cells 100, advantageously lithium-ion, and in particular is intended to be mounted, preferably in a simultaneous manner, on an electrolyte cell 100 at least during the step of forming the latter.

More in detail, with temporary it is intended that the cap 1 mounted on the electrolyte cell 100 is intended to be removed from the latter at the end of the forming process, as described with greater detail hereinbelow.

For such purpose, as better described hereinbelow, the cap 1 is removably connectable to the electrolyte cell 100, and is not fixed to the same cell 100 or made for example in a single body with the latter.

In a per se known manner, each electrolyte cell 100 comprises an external casing defining a housing cavity, within which the electrodes are placed. More in detail, during the production of the electrolyte cell 100, on the external casing at least one filling through hole 101 is made, which places in fluid communication the electrolyte cell 100 itself, and in particular its housing cavity, with the external environment.

More in detail, the filling hole 101 has the function of allowing the insertion within the electrolyte cell 100 of at least one electrolyte, and of allowing the outflow of gases that can be generated within the electrolyte cell 100 itself during forming step.

For example, the filling hole has cylindrical shape and has a diameter comprised between 1 mm and 5 mm, preferably close to 3 mm.

In accordance with the invention, the cap 1 for electrolyte cells 100 comprises a main body 2, which, as reported above, is intended to be connected to the electrolyte cell 100, advantageously at the aforesaid filling hole 101.

More in detail, the main body 2 internally defines a supply duct 3 which is extended along an extension axis X between a first opening 31, susceptible of being placed at the filling hole 101 of the electrolyte cell 100 in order to place the latter, and preferably its internal cavity, in fluid communication with the supply duct 3, and an opposite second opening 32, for the introduction and/or the extraction of a fluid into and/or from the electrolyte cell 100 through the supply duct 3 itself.

Advantageously, the supply duct 3 is extended around the aforesaid extension axis X with substantially axial-symmetric shape.

Preferably, the main body 2 is extended along the extension axis X between a first end 2', at which the aforesaid first opening 31 of the supply duct 3 is placed, and an opposite second end 2".

Advantageously, the main body 2 comprises an external surface 24 which is extended with substantially flared form moving away from the extension axis X from the first end 2' to the second end 2". Preferably, the external surface 24 of the main body 2 is extended in axial-symmetric manner around the extension axis X.

Preferably, the external surface 24 is extended around the extension axis X with substantially axial-symmetric shape.

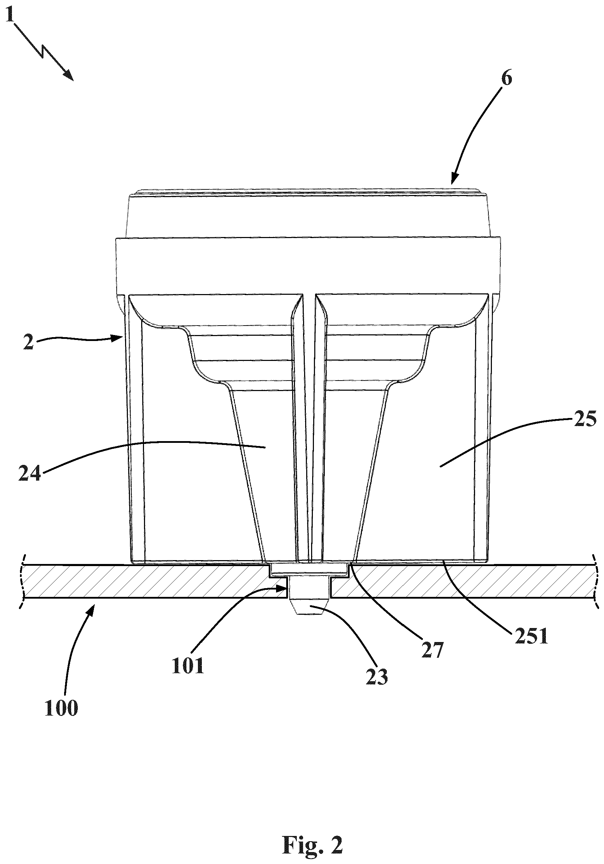

As is seen in figure 2, the external surface 24 is advantageously provided with multiple shoulders that vary the width thereof (in particular measured with respect to the extension axis X) in a substantially discontinuous manner.

Preferably, the cap 1 comprises multiple stiffening wings 25 fixed to the main body 2 and extended radially projecting from the external surface 24 with respect to the extension axis X, which have the function of structurally stiffening the main body 2 itself in order to increase its mechanical strength, as well as stabilizing the abutment of the cap 1 against the external casing of the electrolyte cell 100 as described more in detail hereinbelow. Advantageously, the stiffening wings 25 are integrally made with the main body 2.

Advantageously, the main body 2 is made of a plastic material, compatible with the electrolyte intended to be placed within the electrolyte cell 100, such as for example polypropylene (PP). The cap 1 for electrolyte cells 100 comprises, in addition, a shutter 4, which at least partially engages the supply duct 3 and is slidably connected to the main body 2.

Advantageously, the shutter 4 is made of a plastic material, compatible with the electrolyte intended to be placed within the electrolyte cell 100. Preferably, the shutter 4 is made of polypropylene (PP).

The shutter 4 is movable along the extension axis X between a closed position, in which it is placed to close the supply duct 3 of the main body 2 in order to prevent the passage of fluid along the supply duct 3 itself, preferably through the aforesaid first opening 31, and an open position, in which the shutter 4 frees the supply duct 3 in order to allow the passage of fluid along the supply duct 3 for enabling the introduction and/or the extraction of fluid into/from the electrolyte cell 100.

Advantageously, in the closed position, the shutter 4 hermetically seals the supply duct 3.

More in detail, the shutter 4 is shaped in a manner such to be able to interfere with the main body 2 when moved into the closed position, in order to obstruct the passage of fluid along the supply duct 3, substantially not interfering with the main body 2 when moved into the open position in order to free the passage of fluid along the same supply duct 3.

In this manner, with the shutter 4 in the open position, it is possible to introduce the electrolyte into the electrolyte cell 100, in particular by making it transit along the aforesaid supply duct 3, or, alternatively it is possible to suction, from the electrolyte cell 100 itself, the gases generated during the forming step, in particular by making them transit along the aforesaid supply duct 3. In addition, with the shutter 4 in the closed position, no fluid can transit along the supply duct 3 and, thus, the electrolyte cell 100 results hermetically sealed.

In this manner, the cap 1 can be indiscriminately used during the steps of charging the electrolyte in the electrolyte cell 100 and during the steps of suction of the gases produced during forming, without having to remove it therefore from the electrolyte cell 100 during such steps.

According to the idea underlying the present invention, the cap 1 comprises at least one elastically pliable portion 5 fixed to the main body 2 inside the supply duct 3, which is extended projecting towards the interior of the supply duct 3 and is configured for being elastically deformed following the movement of the shutter 4 from the closed position to the open position, in order to elastically bring the shutter 4 from the open position to the closed position.

In particular, with the shutter 4 in the open position, the elastically pliable portion 5 is arranged to return, by elastic return, the shutter 4 from the open position to the closed position. Advantageously, in the open position, the shutter 4 is at least partially inserted into the supply duct 3.

Advantageously, each elastically pliable portion 5 is made of polymer material, preferably an elastomer, compatible with the electrolyte intended to be placed within the electrolyte cell 100. Preferably, each elastically pliable portion 5 is made of EPDM.

Preferably, each elastically pliable portion 5 is integrally made with the main body 2. In particular, the main body 2 and the elastically pliable portions 5 are advantageously made by means of injection molding, preferably co-molding. In this manner, the production of the main body 2 and of the elastically pliable portions 5 is executed with a single process and, in addition, no assembly is necessary, reducing the production costs of the cap.

Advantageously, each elastically pliable portion 5 is susceptible of exerting, on the shutter 4, an elastic return force in order to push it towards the closed position, and such return force is substantially proportional to the deformation of the elastically pliable portion 5 itself. Preferably, the aforesaid elastic return force is minimal with the shutter 4 in the closed position (since the elastically pliable portion 5 is substantially non-deformed) and is maximum with the shutter 4 in the open position (the elastically pliable portion 5 being the most deformed). Advantageously, the elastically pliable portion 5 is arranged to move, in particular by means of the aforementioned elastic return force, the shutter 4 along the extension axis X, in particular away from the first opening 31, in order to elastically return the shutter 4 from the open position to the closed position.

In operation, in order to free the passage of fluid (preferably electrolyte or gas) along the supply duct 3, it is necessary to exert an external force on the shutter 4, substantially parallel to the extension axis X and oriented towards the interior of the electrolyte cell 100, sufficient for overcoming the elastic return force exerted on the shutter 4 itself by each elastically pliable portion 5, so as to move it along the extension axis X from the closed position to the open position.

In addition, in order to close the supply duct 3 so as to prevent the passage of fluid therethrough, it is sufficient to remove the aforesaid external force. Consequently, the elastic return force exerted by each elastically pliable element 5 remains the only force acting on the shutter 4 (excluding possible friction), which, as reported above, moves the shutter 4 from the open position to the closed position.

In this manner, the cap 1 for electrolyte cells 100, object of the present invention, is arranged for operating in fail safe mode. Indeed, in the absence of the aforesaid external force applied to the shutter 4, the latter in any case tends to return towards the aforesaid closed position, allowing the isolation of the electrolyte cell 100 at any moment, thus preventing an undesired contact from occurring between the electrolyte and the humid ambient air, in the event in which there is any one unexpected event during the forming process of the electrolyte cell 100 itself. In this manner, therefore, the cap 1, object of the invention, can be employed during the entire forming process (filling, aging, ventilation) without having to be removed and substituted before each new step, and eliminating the need to operate in protect environments (dry rooms), therefore allowing considerable reduction of the production costs of the electrolyte cells on which it is mounted.

For example, during the forming of the electrolyte cell 100 with the cap 1, object of the present invention, mounted thereon, the electrolyte cell 100 is susceptible of preferably being placed below an operating head. More in detail, the operating head advantageously comprises a pusher element, which is arranged for exerting, on the shutter 4, the aforesaid external force in order to move it from the closed position to the open position.

The operating head can also comprise a suction duct, which is arranged for suctioning, through the supply duct 3, the gases that flow out from the electrolyte cell 100, and/or a filling duct, which is susceptible of introducing electrolyte into the supply duct 3 and, consequently, within the electrolyte cell 100 itself.

More in detail, the electrolyte cell 100 and the operating head are mutually movable at least along the extension axis X. For example, the operating head remains stopped and the electrolyte cell 100 is moved by suitable movement means long a direction parallel to the extension axis X towards the operating head in a manner such that the pusher element acts against the shutter 4 by applying the aforesaid external force and moving it towards the open position. In such situation, the supply duct 3 is free (open) and it is possible to introduce into the electrolyte cell 100, through the supply duct 3 itself, the electrolyte coming from the filling duct or, alternatively, suction the gases generated within the electrolyte cell 100 during forming.

In addition, the main body 2 is provided with a centering portion 6, which is extended with a flaring increasing starting from the second opening 32 of the supply duct 3 along the aforesaid extension axis X, preferably up to an upper opening 61, which is advantageously provided with a width (measured transverse to the extension axis X) greater than the aforesaid second opening 32.

Preferably, the ratio between the area of the upper opening 61 of the centering portion 6 and the area of the first opening 31 is greater than 50, and still more preferably is greater than 75.

Preferably, since the first opening 31 is substantially sized based on the filling hole 101 of the electrolyte cell 100, also the ratio between the area of the upper opening 61 of the centering portion 6 and the area of the filling hole 101 of the electrolyte cell 100 will be greater than 50, and still more preferably is greater than 75.

In this manner, with the cap 1, object of the present invention, the centering portion 6 has a substantially funnel-like function, considerably reducing the tolerance requirement on the mutual positioning between the operating head (and in particular its filling and suction ducts) and the cap 1 (and consequently the filling hole 101 of the electrolyte cell 100).

Generally, since the cost for arranging movement means (in this case for the movement of the electrolyte cells 100 relative to the operating heads) is directly proportional to the tolerance on the final positioning with respect to an objective positioning, the reduction of the tolerance on the mutual positioning between the operating head and the cap 1 involves a reduction of the costs for attaining the movement means, reducing the final production cost of a single electrolyte cell 100, in addition of course to reducing the risks of errors during the charging of the electrolyte in the electrolyte cell 100.

Advantageously, the cap 1 comprises a sealing gasket 62, which is preferably fixed above the centering portion 6. In particular, the sealing gasket 62 is extended around the extension axis X and delimits the aforesaid upper opening 61. Preferably, the sealing gasket 62 is integrally made with the centering portion 6 of the main body 2. In operation, the sealing gasket 62 is susceptible of abutting against the aforesaid operating head during the step of forming the electrolyte cell 100 (both during the charging of the electrolyte and during the ventilation of the gases) so as to ensure the isolation of the supply duct 3 from the external environment, in this manner in particular preventing the electrolyte from coming into contact with the humid air during the forming of the electrolyte cell 100, and ensuring the seal between the cap 1 and the operating head, enabling the application of a vacuum condition within the electrolyte cell 100. Such vacuum condition is necessary first of all for suctioning the gases from the electrolyte cell 100, and is useful also during the insertion of the electrolyte in the electrolyte cell 100, in a manner such that the electrolyte itself is "resuctioned" within the electrolyte cell 100, such to increase the penetration of the electrolyte itself between the electrodes.

Advantageously, the supply duct 3 is provided with an enlarged section 33, which defines a housing seat 331.

Advantageously, the enlarged section 33 is extended along the extension axis X between an upper edge 33' directed towards the second opening 32 of the supply duct 3 and an opposite lower edge 33", directed towards the first opening 31.

Preferably, the supply duct 3 is provided with an introduction section 35, which is extended along the aforesaid extension axis X between the second opening 32 and the enlarged section 33. Advantageously, the introduction section 35 is extended with shape substantially flared in moving away from the main extension axis X starting from the enlarged section 33. In this manner, the introduction section 35 facilitates the flow of fluid, and in particular of the electrolyte, towards the enlarged section 33 of the supply duct 3, in particular cooperating with the centering portion 6.

Preferably, the shutter 4 comprises a stem 41, which is extended, along the extension axis X, at least partially within the supply duct 3, and an enlarged body 42, which is fixed to the stem 41 and is projectingly extended laterally from the stem 41 itself.

The stem 41 is extended advantageously along the extension axis X between an upper end 41' and an opposite lower end 41", directed towards the first opening 31, in which the upper end 41' of the stem 41 is preferably placed beyond the second opening 32, substantially at the upper opening 61, and still more preferably projecting externally from the supply duct 3 when the shutter 4 is situated in closed position.

Advantageously, at least with the shutter 4 in the closed position, the stem 41 is placed to traverse the upper opening 61 of the centering portion 6.

Preferably, the stem 41 of the shutter 4 comprises a thrust surface 411 placed at the upper end 41 substantially perpendicular to the extension axis X, and against which the pusher element of the operating head is susceptible of acting in order to apply the aforesaid external force to the shutter 4, moving it towards the open position.

Preferably, the ratio between the area of the thrust surface 411 of the shutter 4 and the area of the filling hole 101 of the electrolyte cell 100 is greater than 2, and still more preferably is greater than 2.5.

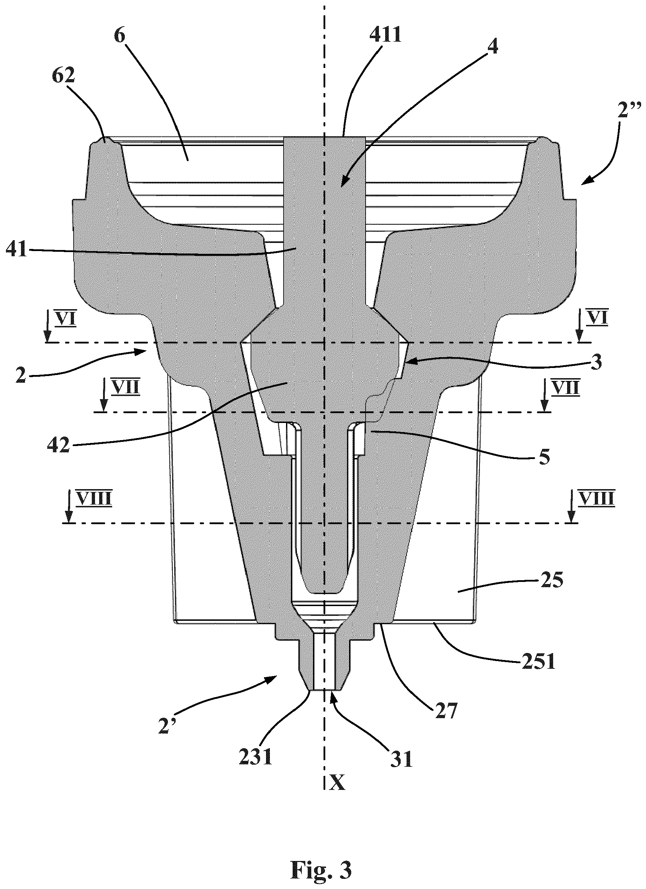

Advantageously, as is visible from figure 3, the stem 41 does not have a constant section along the entire extension thereof between the upper end 41' and the lower end 41", but rather it has a lower portion, which is extended between the enlarged body 42 of the shutter 4 and the lower end 41" and has a narrow section, and an upper portion which is extended between the enlarged body 42 of the shutter 4 and the upper end 41' and has a wide section, preferably with section equal to the area of the thrust surface 411.

In this manner, the increase of the area of the thrust surface 411 allows considerably reducing the tolerance requirement on the mutual positioning between the pusher element of the operating head and the stem 41 of the shutter 4, which, as discussed above, involves a reduction of the costs for attaining the movement means, reducing the final production cost of a single electrolyte cell 100.

Preferably, the stem 41 and the enlarged body 42 are made of plastic material, preferably compatible with the electrolyte intended to be placed within the electrolyte cell 100. Preferably, the stem 41 and the enlarged body 42 are made of polypropylene (PP).

Advantageously, the stem 41 and the enlarged body 42 are attained in a single body. Without departing from the protective scope of the present invention, the stem 41 and the enlarged body 42 can be two components that are separate from each other, and the enlarged body 42 can be fixed to the stem 41 by means of fixing means, e.g. by means of one or more screws. Preferably, the enlarged body 42 of the shutter 4 is placed in the housing seat 331 defined by the enlarged section 33 of the supply duct 3. In this manner, the housing seat 331 limits the movement of the enlarged body 42 and, hence, of the shutter 4, along the extension axis X, preventing the undesired removal from the supply duct 3.

Preferably, the main body 2 comprises at least one abutment wall 21, which is directed towards the first opening 31 and on the upper part delimits the housing seat 331.

Advantageously, the abutment wall 21 is extended starting from the upper edge 33' of the enlarged section 33 of the supply duct 3 moving away from the extension axis X. Preferably, the abutment wall 21 is extended starting from the aforesaid upper edge 33' tilted towards the first opening 31 of the supply duct 3.

Without departing from the protective scope of the present invention, the abutment wall 21 can be extended transverse to the aforesaid extension axis X.

Advantageously, the main body 2 comprises at least one lower abutment wall 26, which is directed towards the second opening 32 and on the lower part delimits the housing seat 331.

Preferably, the lower abutment wall 26 is extended starting from the lower edge 33" of the enlarged section 33 of the supply duct 3 moving away from the extension axis X, preferably transverse to the latter. Without departing from the protective scope of the present invention, the abutment wall 21 can be extended starting from the lower edge 33" that is tilted with respect to extension axis X.

Advantageously, the enlarged body 42 of the shutter 4 is provided with at least one closure wall 421, which is directed towards the second opening 32 of the supply duct 3. Preferably, the closure wall 421 is extended projecting from the stem 41 of the shutter 4, that is tilted with respect to the extension axis X towards the lower end 41" of the stem 41 itself.

Without departing from the protective scope of the present invention, the closure wall 421 can be extended transverse to the aforesaid extension axis X projecting from the stem 41 of the shutter 4.

Preferably, the closure wall 421 is placed in abutment against the abutment wall 21 of the main body 2 with the shutter 4 in the closed position, in order to close the supply duct 3 and prevent the passage of fluid along the latter.

In this manner, when the shutter 4 is in the closed position, the coupling between the closure wall 421 of the shutter 4 and the abutment wall 21 of the main body 2 ensures that the electrolyte cell 100 is sealed with respect to the external environment, preventing the electrolyte placed within the electrolyte cell 100 itself from coming into contact with the humid air. In addition, when the shutter 4 is moved towards the open position, the closure wall 421 is moved away from the abutment wall 21 and a gap is created between them that allows the passage of fluid.

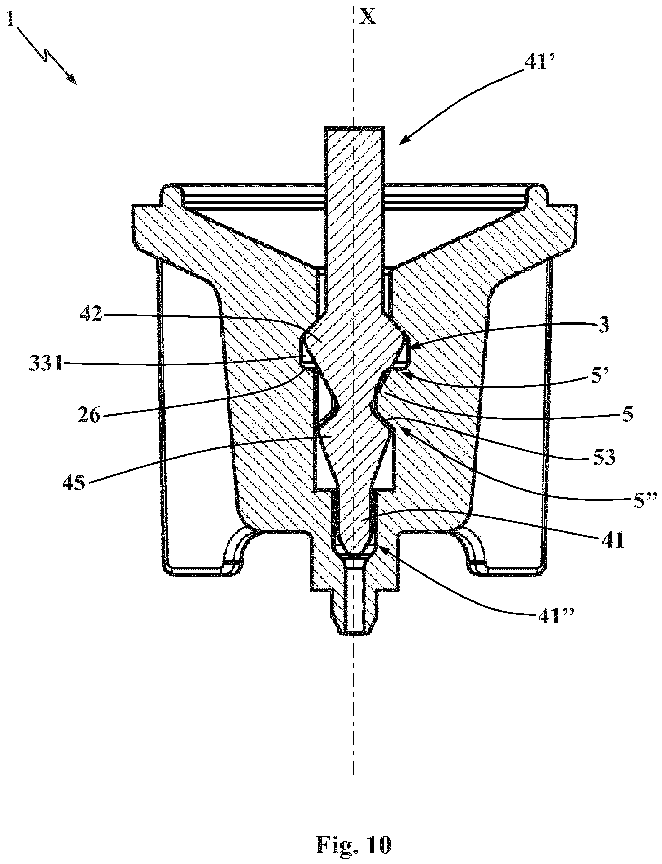

Preferably, the closure wall 421 is attained with a material that is at least partially elastically pliable. In this manner, when the shutter 4 is in the closed position, the closure wall 421 is susceptible of being elastically deformed due to the action of the elastic return force exerted by each elastically pliable portion 5 on the shutter 4 itself, in this manner increasing the contact surface between closure wall 421 itself and the abutment wall 21 of the main body 2 and, consequently, increasing the seal of the cap 1 with the shutter 4 in the closed position. According to a second cap 1 embodiment for electrolyte cells 100 represented in figure 10, the shutter 4 advantageously comprises an auxiliary enlarged body 45, which is fixed to the stem 41, is projectingly extended laterally from the latter, is preferably placed spaced from the enlarged body 42 and interposed between the latter and the lower end 41" of the stem 41. Advantageously, the auxiliary enlarged body 45 is placed below the housing seat 331 defined by the enlarged section 33 of the supply duct 3. Preferably, in addition, the elastically pliable portion 5 is placed below the housing seat 331. As better described hereinbelow, the elastically pliable portion 5 defines an auxiliary abutment wall 53, which is directed towards the first opening 31 and against which the auxiliary enlarged body 45 is placed in abutment with the shutter 4 in the closed position.

In this manner, the coupling between the auxiliary enlarged body 45 and the auxiliary abutment wall 53 increases the seal of the cap 1, object of the present invention, with the shutter 4 in the closed position, reducing the possibility that the electrolyte within the electrolyte cell 100 comes into contact with the humid air.

Advantageously, the main body 2 is provided with an internal surface 22, which laterally delimits the supply duct 3, and each elastically pliable portion 5 is extended projecting from the internal surface 22 of the main body 2 towards the interior of the supply duct 3.

Preferably, each elastically pliable portion 5 is placed at the enlarged section 33 of the supply duct 3, in particular within the housing seat 331.

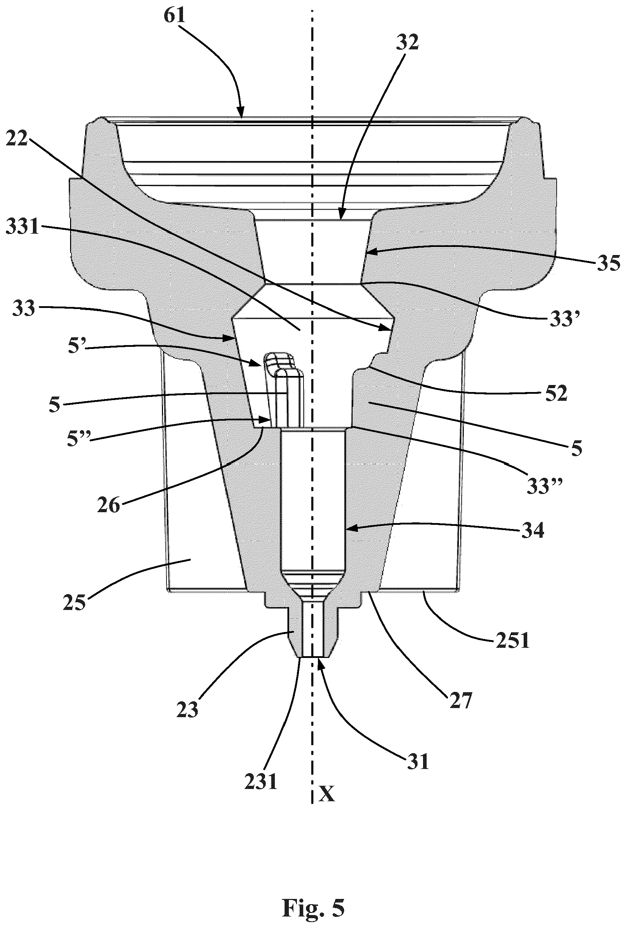

Advantageously, each elastically pliable portion 5 is extended, advantageously parallel to the extension axis X, between an upper end portion 5' directed towards the second opening 32 of the supply duct 3 and an opposite lower end portion 5", directed towards the first opening 31. Preferably, each elastically pliable portion 5 is fixed to the lower abutment wall 26 of the main body 2. More in detail, in accordance with the first embodiment, as is seen from figure 5, the elastically pliable portion 5 is placed within the housing seat 331 and is fixed to the lower abutment wall 26 at the lower end portion 5" thereof.

Otherwise, in accordance with the second embodiment represented in figure 10, the elastically pliable portion 5 is placed outside the housing seat 331 and is fixed to the lower abutment wall 26 at the upper end portion 5' thereof. In particular, in accordance with such second embodiment, the auxiliary abutment wall 53 is defined by the elastically pliable portion 5 at the lower end portion 5" thereof.

In other words, in accordance with the second embodiment represented in figure 10, the elastically pliable portion 5 is interposed between the enlarged body 42 and the auxiliary enlarged body 45.

In this manner, the lower abutment wall 26 provides a support to each elastically pliable portion 5 when the shutter 4 is moved towards the open position, in particular by reducing the deformation thereof such to prevent possible yielding of the elastically pliable portions 5 that can compromise the return of the shutter 4 into the closed position.

Advantageously, the cap 1 comprises multiple elastically pliable portions 5, spaced from each other circumferentially with respect to the extension axis X, preferably equidistant from each other. According to the embodiment represented in the enclosed figures the cap 1 comprises three elastically pliable portions 5 placed around the extension axis X and spaced from each other by an angle of 120°.

Preferably, the enlarged body 42 of the shutter 4 is configured for interfering with at least one elastically pliable portion 5 and for deforming the latter following the movement of the shutter 4 from the open position to the closed position.

Advantageously, the enlarged body 42 of the shutter 4 is configured for interfering at least with the upper end portion 5' of at least one elastically pliable portion 5.

Preferably, with the shutter 4 in the closed position the enlarged body 42 interferes with each elastically pliable portion 5, and is in particular placed in abutment against all the elastically pliable portions 5. In this manner, each elastically pliable portion 5 exerts, on the shutter, the aforesaid elastic return force even when the latter is in the closed position, preventing the shutter from moving in an undesired manner from the closed position itself, allowing the partial passage of fluid along the supply duct 3.

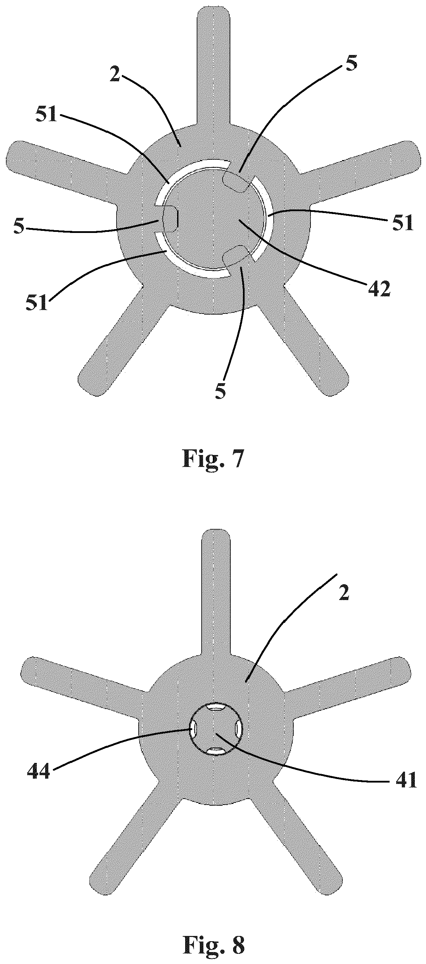

Advantageously, as is seen in figure 7, the aforesaid elastically pliable portions 5 between them delimit an intermediate passage channel 51 in order to allow the passage of fluid along the supply duct 3 between the elastically pliable portions 5 themselves. Preferably, the intermediate passage channel 51 is extended around the extension axis X interposed between the internal surface 22 of the main body 2 and the enlarged body 42 of the shutter 4, preferably at the enlarged section 33 of the supply duct 3.

In this manner, when the shutter 4 is in the open position, the aforesaid intermediate passage channel 51 allows the fluid to transit along the supply channel 3 even if the enlarged body 42 interferes with the elastically pliable portions 5.

Preferably, each elastically pliable portion 5 comprises an abutment seat 52 which is placed at the upper end portion 5'. Advantageously, the enlarged body 42 of the shutter 4 is placed in abutment at least against the abutment seat 52 of at least one elastically pliable portion 5 and is susceptible of acting thereon in order to elastically deform the elastically pliable portion 5, in particular along a compression direction that is with respect to the extension axis X, preferably substantially orthogonal to the latter.

In this manner, in the event in which multiple elastically pliable portions 5 are present, the corresponding abutment seats 52 have the function of centering the enlarged body 42 of the shutter with respect to the extension axis X, in particular ensuring the aforesaid intermediate passage channel 51 from remaining open in order to allow the passage of fluid along the supply duct 3.

Advantageously, the enlarged body 42 of the shutter 4 is provided with at least one interference wall 422, directed towards the first opening 31 of the supply duct 3 and arranged for interfering and elastically deforming at least one elastically pliable portion 5, preferably all. Advantageously, the interference wall 422 of the shutter 4 is susceptible of being placed in abutment at the abutment seat 52 of each elastically pliable portion 5, acting thereon in order to elastically deform them.

According to the embodiment represented in the enclosed figures, the interference wall 422 is extended projecting from the stem 41 of the shutter 4 transverse to the aforesaid extension axis X projecting from the stem 41 of the shutter 4. Without departing from the protective scope of the present invention, the interference wall 422 can be extended tilted with respect to the extension axis X towards the second opening 32 of the supply duct 3.

Preferably, the supply duct 3 comprises at least one guide section 34 and the shutter 4 comprises a guide portion 43, which slidably engages, substantially to size the guide section 34 of the supply duct 3 in order to guide the shutter 4 in the supply duct 3 along the extension axis X. Advantageously, the guide section 34 is extended along the extension axis X starting from the enlarged section 33 of the supply duct 3, preferably starting from its lower edge 33", with preferably constant section transverse to the extension axis X. Preferably, the section transverse to the extension axis X of the guide section is circular.

Preferably, the guide portion 43 of the shutter 4 is attained at the stem 41, and advantageously is extended along the extension axis X starting from the lower end 41" preferably up to the aforesaid enlarged body 42.

Advantageously, the guide portion 43 has a maximum width measured transverse to the extension axis X substantially equal to the internal diameter of the guide section 34 of the supply duct 3.

Advantageously, the shutter 4 is provided with multiple longitudinal grooves 44, which are placed on the guide portion 43 and define corresponding conveyance channels in order to allow the passage of fluid along the guide section 34 of the supply duct 3.

Since the engagement substantially to size of the guide portion 43 of the shutter 4 in the guide section 34 of the supply duct 3 would actually prevent the passage of fluid along the guide section 34 itself, the aforesaid longitudinal grooves 44 have the function of placing the first opening 31 in fluid communication with the enlarged section 33 of the supply duct 3. In this manner, when the shutter 4 is in the open position, the fluid is susceptible of transiting along the guide section 34 of the supply duct 3 through the aforesaid longitudinal grooves 44.

Preferably, the longitudinal grooves 44 are attained in a depression at the guide portion 43 of the shutter 4. Advantageously, the longitudinal grooves 44 are extended parallel to the extension axis X starting from the enlarged body 42 of the shutter up to the lower end 41" of the stem 41. In such situation, the fluid is susceptible of transiting along the guide section 34 of the supply duct 3 interposed between the guide section 34 itself and a longitudinal groove 44.

According to a different embodiment not represented in the enclosed figures, the longitudinal grooves 44 are attained inside the guide portion 43.

According to the embodiment represented in the enclosed figures, the main body 2 is provided with an engagement portion 23 projecting below, on which the first opening 31 is attained, and which is susceptible of being engaged with the filling hole 101 of the electrolyte cell 100. Preferably, the main body 2 is provided with a lower face 27, which is directed towards the electrolyte cell 100 and is extended substantially orthogonal to the extension direction X. Advantageously, with the cap 1 mounted on the electrolyte cell 100, the aforesaid lower face 27 is susceptible of being arranged in abutment against the external casing of the electrolyte cell 100 itself in order to maintain the cap 1 aligned with respect to the filling hole 101, in this manner facilitating the stability of the cap 1 mounted on the electrolyte cell 100.

More in detail, the engagement portion 23 is extended projecting below from the lower face 27 of the main body 2, and has a preferably beak-like shape. In particular, the engagement portion 23 has an at least partially flared shape, and is extended starting from the lower face 27 of the main body 2 up to an insertion face 231, directed towards the interior of the electrolyte cell 100 and advantageously orthogonal to the extension axis X, at which the first opening 31 of the supply duct 3 is attained.

Advantageously, the engagement portion 23 defines removable coupling means between the cap 1 and the electrolyte cell 100, i.e. such to allow an easy coupling and uncoupling of the cap 1 on/from the electrolyte cell 100, respectively before the start and after the end of the forming step.

More in detail, the engagement portion 23 is configured for engaging, preferably substantially by interference, the filling hole 101 of the electrolyte cell 100.

In this manner, the mechanical interference retains the cap 1 in position with respect to the electrolyte cell 100, and also ensure the seal the coupling, preventing the undesired outflow of harmful gases from the electrolyte cell 100 with the cap 1 mounted thereon and the shutter 41 in the closed position.

Advantageously, each stiffening wing 25 is extended along the extension axis X starting from the centering portion 6 up to an abutment surface 251 that is substantially orthogonal to the extension direction X itself. Preferably, with the cap 1 mounted on the electrolyte cell 100, advantageously with the engagement portion 23 engaged with the filling hole 101, the abutment surface 251 of at least one abutment tab 25, preferably all, is susceptible of abutting against the external casing of the electrolyte cell 100 itself in order to maintain the cap 1, and in particular the engagement portion 23, aligned with respect to the filling hole 101. In this manner, the abutment tabs 25 facilitate the stability of the cap 1 mounted on the electrolyte cell 100, in particular preventing an undesired removal of the engagement portion 23 from the filling hole 101.

Preferably, the abutment surface 251 of each stiffening wing and the lower face 27 of the main body are coplanar.

Also forming the object of the present invention is a process for the production of an electrolyte cell 100 for lithium batteries, which comprises a step of arranging an electrolyte cell 100, advantageously provided with an external casing within which the electrodes are placed, and on which a filling through hole 101 is placed that is communicating with the interior of the electrolyte cell 100.

Subsequently, the process comprises a capping step, in which a cap 1 of the above-described type is mounted on the electrolyte cell 100, regarding which the same reference numbers will be maintained hereinbelow for the sake of a greater description clarity.

Preferably, the process comprises at least one multi-stage formation step, in which at least one charging/discharging cycle is attained, in which at least one electric voltage and at least one electric current is applied to the electrolyte cell 100, respectively for increasing or decreasing the charge thereof.

The process, object of the present invention, comprises at least one injection step, preferably executed during the aforesaid formation step, in which the shutter 4 of the cap 1 is thrust from the closed position to the open position and in which at least one electrolyte is inserted in the electrolyte cell 100 through the supply duct 3.

Advantageously (in particular in said injection step), as reported above, the shutter 4 is susceptible of being pushed in the open position, against the elastic action of the elastically pliable elements 5, by the action of a pusher element of an operating head that acts vertically against the shutter 4.

More in detail, in such step the operating head is advantageously arranged in abutment against the aforesaid sealing gasket 62 in order to ensure the seal between the cap 1 and the operating head, in particular enabling the application of a vacuum condition the electrolyte cell 100, which is necessary for the suction of the gases from the electrolyte cell 100.

Preferably, at the end of each injection step, the process comprises a first closing step, in which the shutter 4 of the cap 1 is automatically pushed from the open position to the closed position by at least one elastically pliable portion 5, in order to close the supply duct 3, preventing the passage of electrolyte along the supply duct 3.

Advantageously, the process comprises a step of creation of a slight vacuum within the electrolyte cell 100, which is preferably executed before the aforesaid initiation step. In this manner, the slight vacuum within the electrolyte cell 100 facilitates the insertion of the electrolyte, allowing the latter to penetrate in an optimal manner between the electrodes placed in the electrolyte cell 100 itself.

Advantageously, the process comprises at least one aging step, in which the cell is electrically isolated and is left to rest for a specific time interval in order to allow the recombination of the ions of the electrolyte solutions at its interior. Preferably, in the aforesaid aging step, the cap 1, object of the present invention, is mounted on the electrolyte cell 100 and the shutter 4 is in the closed position. In this manner, during the aging step the cap 1 ensures the isolation of the electrolyte cell 100 with respect to the outside environment, in particular preventing the contact between electrolyte and humid air.

In addition, the process, object of the present invention, comprises at least one degassing step, preferably executed during the aforesaid formation step, in which the shutter 4 of the cap 1 is newly pushed from the closed position to the open position in order to allow the gas that formed inside the electrolyte cell 100 to exit through the supply duct 3.

Advantageously (in particular in said degassing step), the shutter 4 is susceptible of being pushed in the open position, against the elastic action of the elastically pliable elements 5, by the action of the pusher element of the operating head that acts vertically against the shutter 4. More in detail, in such step, the operating head is advantageously arranged in abutment against the aforesaid sealing gasket 62 in order to ensure between the cap 1 and the operating head, in particular enabling the application of a vacuum condition within the electrolyte cell 100. In particular, the aforesaid vacuum condition is generally used also for the insertion of the electrolyte in the electrolyte cell 100, in a manner such that the electrolyte itself is "resuctioned" within the electrolyte cell 100 in a manner such to increase the penetration of the electrolyte itself between the electrodes.

Advantageously, at the end of each degassing step, the process comprises a second closing step, in which the shutter 4 of the cap 1 is automatically pushed from the open position to the closed position by at least one elastically pliable portion 5 in order to close the supply duct 3, preventing the passage of the gases from the electrolyte cell 100 towards the environment. Advantageously, the aforesaid steps of injection, aging and degassing are executed in series with each other, preferably multiple consecutive times, so as to obtain the forming of the electrolyte cell 100.

The cap 1, object of the invention, therefore allows attaining a process for producing an electrolyte cell 100 that is quicker and simpler than the known processes, in particular allowing obtaining a process in which the operations of mounting and dismounting of the cap 1 on/from the electrolyte cell 100 are limited. In addition, in such a manner it is possible to reduce the need to execute at least part of the forming step in a controlled environment (dry room). Advantageously, the entire forming step (regardless of the number of injecting, aging and degassing cycles) is attained by means of the use of the same cap 1, i.e. by executing a single mounting operation (preferably before starting the forming step) and a single dismounting operation (preferably at the end of the same forming step).

Finally, the process comprises a sealing step, in which the cap 1 is separated from the electrolyte cell 100 and the insertion hole 101 of the electrolyte cell 100 is sealed in order to prevent the contact between humid air and electrolyte during the use of the electrolyte cell 100 itself.

The invention thus conceived therefore attains the pre-established objects.

## Claims

1. Cap (1) for electrolyte cells (100), such electrolyte cell (100) provided with at least one filling hole (101) for the introduction of at least one electrolyte, said cap (1) comprising:
- a main body (2), which is intended to be connected to said electrolyte cell (100), internally defines a supply duct (3) which is extended along an extension axis (X) between a first opening (31), susceptible of being placed at the filling hole (101) of said electrolyte cell (100) in order to place said electrolyte cell (100) in fluid communication with said supply duct (3), and an opposite second opening (32), for the introduction and/or the extraction of a fluid into and/or from said electrolyte cell (100) through said supply duct (3);
- a shutter (4), which at least partially engages said supply duct (3), is slidably connected to said main body (2), and is movable along said extension axis (X) between a closed position, in which said shutter (4) is placed to close the supply duct (3) of said main body (2) in order to prevent the passage of said fluid along said supply duct (3), and an open position, in which said shutter (4) frees said supply duct (3) in order to allow the passage of said fluid along said supply duct (3) for enabling the introduction and/or extraction of said fluid in said electrolyte cell (100);
said cap (1) being **characterized in that** it comprises at least one elastically pliable portion (5) fixed to said main body (2) inside said supply duct (3), which is extended projecting towards the interior of said supply duct (3) and is configured for being elastically deformed following the movement of said shutter (4) from said closed position to said open position, in order to elastically bring said shutter (4) from said open position to said closed position;
said main body (2) being provided with a centering portion (6), which is extended with a flaring increasing from said second opening (32) of said supply duct (3) along said extension axis (X).

2. Cap according to claim 1, **characterized in that** said supply duct (3) is provided with an enlarged section (33), which defines a housing seat (331), and said shutter (4) comprises a stem (41), which is extended, along said extension axis (X), at least partially within said supply duct (3), and an enlarged body (42), which is fixed to said stem (41) and is projectingly extended laterally from said stem (41);
the enlarged body (42) of said shutter (4) being placed in the housing seat (331) defined by the enlarged section (33) of said supply duct (3).

3. Cap according to claim 2, **characterized in that** said main body (2) comprises at least one abutment wall (21), which is directed towards said first opening (31) and on the upper part delimits said housing seat (331), and the enlarged body (42) of said shutter (4) being provided with at least one closure wall (421), which is directed towards said second opening (32);
said closure wall (421) being placed in abutment against the abutment wall (21) of said main body (2) with said shutter (4) in said closed position, in order to close said supply duct (3) and prevent the passage of said fluid along the latter.

4. Cap according to any one of the preceding claims, **characterized in that** main body (2) is provided with an internal surface (22), which laterally delimits said supply duct (3), and said at least one elastically pliable portion (5) projectingly extended from the internal surface (22) of said main body (2) towards the interior of said supply duct (3).

5. Cap according to claim 4, **characterized in that** it comprises multiple elastically pliable portions (5), spaced from each other circumferentially with respect to said extension axis (X); said elastically pliable portions (5) between them delimiting an intermediate passage channel (51), in order to allow the passage of fluid along said supply duct (3) between said elastically pliable portions (5).

6. Cap according to claim 2, **characterized in that** the enlarged body (42) of said shutter (4) is configured for interfering with said at least one elastically pliable portion (5) and deforming said elastically pliable portion (5) following the movement of said shutter (4) from said open position to said closed position.

7. Cap according to claim 6, **characterized in that** the enlarged body (42) is provided with at least one interference wall (422), directed towards the first opening (31) of said supply duct (3) and arranged for interfering and elastically deforming at least one said elastically pliable portion (5).

8. Cap according to any one of the preceding claims, **characterized in that** said supply duct (3) comprises at least one guide section (34) and said shutter (4) comprises a guide portion (43), which slidably engages, substantially to size, the guide section (34) of said supply duct (3) in order to guide said shutter (4) in said supply duct (3) along said extension axis (X).

9. Cap according to claim 8, **characterized in that** said shutter (4) is provided with multiple longitudinal grooves (44), which are placed on said guide portion (43) and define corresponding conveyance channels in order to allow the passage of fluid along the guide section (34) of said supply duct (3).

10. Cap according to any one of the preceding claims, **characterized in that** said main body (2) is provided with an engagement portion (23) projecting below, on which said first opening (31) is made and which is susceptible of being engaged with the filling hole (101) of said electrolyte cell (100).

11. Cap according to any one of the preceding claims, **characterized in that** said at least one elastically pliable portion (5) is susceptible of exerting, on said shutter (4) an elastic return force in order to push it towards said closed position, which said elastic return force is substantially proportional to the deformation of said elastically pliable portion (5);
wherein said elastic return force is minimal with said shutter (4) in said closed position and is maximum with said shutter (4) in said open position.

12. Cap according to any one of the preceding claims, **characterized in that** it comprises a sealing gasket (62) which is fixed above said centering portion (6).

13. Process for producing an electrolyte cell (100) for lithium batteries, which comprises the following steps;
- a step of arranging an electrolyte cell (100);
a capping step, in which a cap (1), according to any one of the preceding claims, is mounted on said electrolyte cell (100);
- at least one injection step, in which the shutter (4) of said cap (1) is thrust from said closed position into said open position and in which at least one electrolyte is inserted in said electrolyte cell (100) through said supply duct (3);
- at least one degassing step, in which the shutter (4) of said cap (1) is thrust from said closed position into said open position in order to allow the gas that formed inside said electrolyte cell (100) to exit through said supply duct (3);
- a sealing step, in which said cap (1) is separated from said electrolyte cell (100) and the insertion hole (101) of said electrolyte cell is sealed;
wherein:
- at the end of said at least one injection step, said process comprises a first closing step, in which said shutter (4) is automatically pushed from said open position to said closed position by said at least one elastically pliable portion (5), in order to close said supply duct (3), preventing the passage of electrolyte along said supply duct (3);
- at the end of said at least one degassing step, said process comprises a second closing step, in which said shutter (4) is automatically pushed from said open position to said closed position by said at least one elastically pliable portion (5) in order to close said supply duct (3), preventing the passage of gases from said electrolyte cell 100 towards the environment.

14. Process for producing an electrolyte cell (100) according to claim 13, **characterized in that** said shutter (4) is pushed in said open position, against the elastic action of said at least one elastically pliable element (5), by the action of a pusher element of an operating head that acts vertically against said shutter (4).

15. Process for producing an electrolyte cell (100) according to claim 14 with a cap (1) according to claim 12, **characterized in that** in said injection step and/or in said degassing step, said operating head is arranged in abutment against said sealing gasket (62) in order to ensure the seal between said cap (1) and said operating head.
